# EUROPÄISCHE PATENTANMELDUNG

(11) **EP 0 565 831 A1**
(43) Veröffentlichungstag der Anmeldung: **20.10.1993**
(21) Anmeldenummer: 93102812.0
(22) Anmeldetag: 24.02.1993
(51) Int. Cl.: B29C 45/00

(54) **Verfahren zur Herstellung von Kunststoffgegenständen**

(30) Priorität: 16.04.1992 DE 4212699
(71) Anmelder: Ferromatik Milacron Maschinenbau GmbH, D-79364 Malterdingen (DE)
(72) Erfinder: Jaroschek, Christoph, Dipl.-Ing., W-7834 Herbolzheim (DE); Nesch, Wolfgang, W-7630 Lahr-Sulz (DE)
(74) Vertreter: Röther, Peter, Dipl.-Phys.

(57) **Zusammenfassung**

Bei einem Verfahren zur Herstellung von Kunststoffgegenständen, die aus mindestens zwei beweglich, insbesondere gelenkig miteinander verbundenen Teilen aus dem gleichen Kunststoffmaterial bestehen, wobei eines der Teile ein spritzgegossener Vorformling (3) ist, dessen Verbindung mit dem mindestens einen weiteren Teil durch Spritzgießen in Overmoulding-Technik hergestellt wird, ist erfindungsgemäß vorgesehen, daß beim Herstellen des Vorformlings (3) im Bereich seiner Kontaktfläche (2) für die spätere Verbindung die physikalischen Eigenschaften dieser Kontaktfläche (2) gegenüber den physikalischen Eigenschaften des anzuspritzenden weiteren Teils verändert werden, wobei die Änderung der physikalischen Eigenschaften zumindest so lange aufrechterhalten wird, bis durch Spritzen und Aushärten des mindestens einen weiteren Teils die Verbindung erfolgt ist.

## Beschreibung

Die Erfindung betrifft ein Verfahren zur Herstellung von Kunststoffgegenständen gemäß dem Oberbegriff des Patentanspruchs 1 sowie eine Vorrichtung zur Durchführung des Verfahrens.

Derartige mehrteilige, dabei eventuell verschiedenfarbige Kunststoffgegenstände können beispielsweise kleine bunte Spielzeugfiguren sein, gelenkig miteinander verbundene Teile für die Kfz-Industrie usw. Ihnen gemeinsam ist, daß zunächst ein Teil der Verbindung hergestellt wird, wobei entweder in diesem eine Kavität oder aber ein dieser Kavität komplementärer Vorsprung (z. B. zylinderförmige Bohrung-Scharnierstift, Kugelgelenkpfanne-Kugel) erzeugt wird.

Im folgenden Verfahrensschritt wird dann das zweite Teil so an das erste, Vorformling genannt, angespritzt, daß je nachdem entweder die Kavität im Vorformling ausgefüllt oder der Vorsprung umspritzt wird. Diese Verfahrensweise wird Overmoulding-Technik genannt und ist beispielsweise aus der DE-PS 33 40 122 bekannt. Dort wird auch eine Möglichkeit beschrieben, wie die einzelnen Verfahrensschritte nacheinander in einem sogenannten Drehwerkzeug durchgeführt werden. Weitere Möglichkeiten bestehen darin, die jeweils gespritzten Teile mittels Handling-Geräten von einer Bearbeitungsstation in die nächste zu befördern oder aber durch Kernzüge entstandene Kavitäten im Vorformling gleich in der Form auszuspritzen.

Wie auch immer, das Problem bei allen Verfahrensalternativen liegt darin, daß verhindert werden muß, daß beim Anspritzen des weiteren Teils bzw. der weiteren Teile an den Vorformling ein Verschweißen bzw. Verschmelzen des Kunststoffs an den Kontaktflächen, die eine bewegliche, insbesondere gelenkige Verbindung ergeben sollen, zu verhindern.

Das gelingt in der Regel, wenn für Vorformling und die weiteren Teile jeweils verschiedene Kunststoffmaterialien gewählt werden, nämlich solche, die untereinander unverträglich sind.

Aus Lagerhaltungs-, also aus wirtschaftlichen Gesichtspunkten heraus, vordringlich aber im Hinblick auf die Umweltproblematik, ist man bestrebt, derartige Gegenstände aus ein und demselben Kunststoff zu fertigen. Gerade bei Zubehörteilen für die Kfz-Industrie spielt heutzutage die problemlose Recycelbarkeit eine entscheidende Rolle. Es stellt einen wirtschaftlich unvertretbar hohen Aufwand dar, beim Recycling eines Autos sämtliche Kunststoffteile nach Kunststoffart zu sortieren, zumal, wenn ein einziges Teil, z. B. eine Lüftungsklappe, selbst aus mehreren Kunststoffarten zusammengesetzt ist.

Es ist zwar in der DE-PS 33 40 122 bereits davon die Rede, derartige Gegenstände aus ein und demselben Kunststoffmaterial zu spritzen. Wie das geschehen soll, insbesondere ohne den Verfahrensablauf lange zu unterbrechen, ist dieser Druckschrift nicht zu entnehmen.

Der Erfindung liegt daher die Aufgabe zugrunde, ein Verfahren und eine Vorrichtung der eingangs genannten Art so weiterzubilden, daß beim Einsatz gleicher Kunststoffmaterialien für die den Gegenstand bildenden Einzelteile diese Einzelteile in schneller Taktfolge zum Gesamtgegenstand vereinigt werden, ohne daß ein ungewolltes Verschweißen auftritt.

Die Aufgabe wird durch die in den Patentansprüchen 1 und 9 genannten Merkmale gelöst. Weitere vorteilhafte Ausführungsformen der Erfindung sind Gegenstand der Unteransprüche.

Es gilt also, schon bei der Herstellung des Vorformlings diesen im Bereich der späteren Kontaktfläche - sei dies die Innenwand der später auszuspritzenden Kavität, sei es die Außenwand des später zu umspritzenden Vorsprungs so zu verändern, daß er in diesem Bereich gegenüber dem anzuspritzenden Kunststoff unverträglich ist, obwohl chemisch gesehen beide Materialien identisch sind. Es ist also Kernpunkt der Erfindung, künstlich eine vorübergehende oder bleibende Unverträglichkeit zu schaffen, und zwar bereits bei der Herstellung des Vorformlings und nicht erst, wenn der Vorformling bereits fertig ist. Somit ist es möglich, die Taktfolge zeitlich in dem Rahmen zu halten wie bei einem Herstellungsverfahren, bei dem von Natur aus unverträgliche Kunststoffmaterialien verwendet werden.

Durch die Erfindung wird daher erreicht, die Herstellungsgeschwindigkeit bekannter Verfahren beizubehalten, aber Produkte aus einem einzigen Kunststoffmaterial zusammenzusetzen, wodurch die spätere Wiederaufarbeitung entscheidend erleichtert bzw. wirtschaftlich überhaupt erst ermöglicht wird.

Erfindungsgemäß wird gemäß Anspruch 2 als erste Variante vorgeschlagen, bei der Herstellung des Vorformlings dessen Kontaktfläche für die spätere Verbindung extrem abzukühlen.

Bei der Standard-Werkzeugtechnik ist die Kontakttemperatur, d. h., wenn das weitere Teil an den Vorformling angespritzt wird, in der potentiellen Verbindungsstelle etwa die Mitteltemperatur aus Vorformlingstemperatur und der des Umspritzkunststoffs. Der Vorformling hat in der Regel mehr als Raumtemperatur und der Umspritzkunststoff weist etwa 200°C auf.

Die sich ergebende Mitteltemperatur liegt mithin bei über 100°C, einer Temperatur, die ausreicht, eine Verschmelzung im Kontaktbereich zu verursachen, so daß die angestrebte Beweglichkeit der Verbindung nicht zustandekommt.

Mit Hilfe des erfindungsgemäßen Verfahrens wird nun gezielt die Kontaktfläche des Vorformlings unter eine Temperatur herabgekühlt, die in Verbindung mit der Temperatur des Umspritzkunststoffes eine Mitteltemperatur ergibt, die deutlich unter der Verschmelzungstemperatur liegt.

Gemäß Anspruch 6 geschieht dies durch Zuleitung eines verflüssigten Gases (CO₂, N₂ etc.) in die die Kontaktfläche formende Werkzeugregion. Die Wiedererwärmung der Kontaktfläche geschieht dabei nicht derart schnell, daß beim anschließenden Anspritzen des weiteren Teils doch noch eine zum Verschweißen ausreichende Mitteltemperatur entsteht.

Eine zweite Variante zur Veränderung der physikalischen Eigenschaften der Kontaktfläche sieht die Erfindung gemäß Anspruch 3 darin, die Adhäsionskräfte im Kontaktbereich zu reduzieren.

Durch den lokalen Einsatz von Trennmitteln läßt sich die Adhäsion praktisch unterbinden. Unter Adhäsion wird hier die Verbundwirkung verstanden, die nicht auf den eigentlichen Schweißvorgang zurückzuführen ist. Durch die Benetzung der Kontaktfläche schon während der Herstellung des Vorformlings wird einerseits die Verschweißung verhindert und andererseits auf Dauer eine gute Beweglichkeit der Verbindung gewährleistet.

Eine dritte Variante ist Gegenstand des Anspruchs 4. Hierbei wird speziell bei Kunststoffen, die eine teilkristalline Struktur aufweisen, im Bereich der Kontaktfläche des Vorformlings beim Herstellungsprozeß desselben eine hochkristalline Oberflächenschicht erzeugt. Das geschieht durch gezielte Verlangsamung des Abkühlvorgangs in diesem Bereich, eventuell im Zusammenspiel mit Impfung der Oberflächenschicht mit Kristallisationskeimen, ein Vorgang, der mit Nukleierung bezeichnet wird.

Das Aufschmelzen einer derart veränderten Schicht bedarf einer größeren Wärmemenge als der Umspritzkunststoff abzugeben in der Lage ist, so daß keine Verschmelzung stattfinden kann.

Das Spritzgießwerkzeug zur Durchführung des Verfahrens wird derart präpariert, daß der die Kontaktfläche formende Bereich des Werkzeugs einen Einsatz bildet, über dessen Oberfläche die Oberflächenveränderungen der Kontaktfläche des Vorformlings verursacht werden.

Gemäß den Ansprüchen 10 und 11 ist der Einsatz gegenüber dem restlichen Werkzeug thermisch isoliert und verfügt in seinem inneren über mindestens einen Kanal, über den das Kältemittel, beispielsweise flüssiger Stickstoff, bis knapp an die Oberfläche des Einsatzes herangeführt werden kann. Somit ist gewährleistet, daß lediglich die spätere Kontaktfläche in der oben angegebenen Weise abgekühlt wird.

Gemäß den Ansprüchen 12 bis 14 ist der Einsatz aus einem porösem Material hergestellt, beispielsweise aus einem Sintermetall, durch dessen Poren ein Trennmittel, beispielsweise Silikonöl, von außerhalb des Werkzeugs aufgrund Druck- oder des Kapillareffektes aus der Einsatzoberfläche austritt und die Kontaktfläche des Vorformlings benetzt, so daß die Adhäsionskräfte herabgesetzt werden.

Auch hier ist lediglich die spätere Kontaktfläche betroffen. Ein unbeabsichtigtes Benetzen anderer Flächen mit dem Trennmittel ist somit ausgeschlossen, was beim bekannten Trennmittelsprühen nicht der Fall ist.

Gemäß den Ansprüchen 15 und 16 ist der Einsatz mit einer Isolierschicht geringer Wärmeleitfähigkeit (z.B. Teflon, Keramik) überzogen, die ihrerseits goldbeschichtet sein kann.

Durch die Isolierschicht wird ein zu schnelles Abkühlen des Vorformlings in seiner Kontaktflächenregion verhindert. Durch die langsame Abkühlgeschwindigkeit kann an der Oberfläche eines teilkristallinen Kunststoffs eine hochkristalline Schicht erzeugt werden.

Zur Erzeugung dieser hochkristallinen Schicht können darüber hinaus Kristallisationskeime in die Schicht geimpft werden (Nukleierung), wodurch die Kristallisation beschleunigt wird. Die Nukleierung über die Werkzeugoberfläche funktioniert beispielsweise durch das Vorhandensein der Goldbeschichtung.

Erfindungsgemäß ist weiter vorgesehen, mehrere der angesprochenen Verfahrensvarianten miteinander zu kombinieren, sei es in aufeinanderfolgender Weise (beispielsweise in einem Drehwerkzeug) oder aber auch in einem einzigen Formnest.

So ist beispielsweise daran gedacht, zusätzlich zur Benetzung der Kontaktfläche mit einem Trennmittel, diese Kontaktfläche nach Variante 1 stark abzukühlen, wobei werkzeugtechnisch der Sintermetalleinsatz thermisch gegen das restliche Werkzeug isoliert ist und in seinem Inneren ein Kanal zur Führung des Kältemittels angeordnet ist.

Eine weitere Möglichkeit besteht darin, daß zunächst durch langsames Abkühlen und Nukleieren eine hochkristalline Oberflächenschicht in der Kontaktflächenregion erzeugt und anschließend mittels Kältemittel - wie zuvor beschrieben - stark abgekühlt wird. Andere Kombinationen sind denkbar.

Im folgenden wird die Erfindung anhand dreier Ausführungsbeispiele beschrieben. In den Figuren sind alle zum Verständnis nicht unbedingt notwendigen Werkzeug- bzw. Maschinenteile weggelassen, da sie als für den Fachmann bekannt vorausgesetzt werden können.

Es zeigen:
- Fig. 1:: in abgebrochener Darstellung und im Schnitt ein Werkzeug mit gekühltem Formelement;
- Fig. 2:: in abgebrochener Darstellung und im Schnitt ein Werkzeug mit trennmittelbenetzendem Formelement und
- Fig. 3:: in abgebrochener Darstellung und im Schnitt ein Werkzeug mit nukleierendem Formelement.

In den Figuren ist jeweils der Fall dargestellt, daß im Vorformling eine Ausnehmung erzeugt wird. Die Erfindung wird anhand einer derartigen Konfiguration beschrieben. Es ist natürlich auch möglich, die Erfindung bei Werkzeugen anzuwenden, die einen Vorformling mit einem der oben beschriebenen Ausnehmung komplementären Vorsprung erzeugt.

In den skizzenhaften Figuren ist das Werkzeug jeweils mit dem Bezugszeichen 1 versehen. Zu sehen ist in abgebrochener Darstellung nur eine Werkzeughälfte und davon nur der hier interessierende Bereich, in dem eine Kontaktfläche für die spätere bewegliche bzw. gelenkige Verbindung mit einem weiteren Teil aus dem gleichen Kunststoffmaterial wie der Vorformling, erzeugt wird. In allen drei Fällen wird eine zylinderförmige Ausnehmung 2 im Vorformling 3 erzeugt, so daß die spätere Verbindung ein Scharniergelenk wird.

Zur Ausbildung der zylinderförmigen Ausnehmung 2 dient ein ebenfalls zylinderförmiger Stift 4, der einen Einsatz im Werkzeug 1 bildet und in den mit der Vorformlingschmelze gefüllten Formhohlraum hineinreicht.

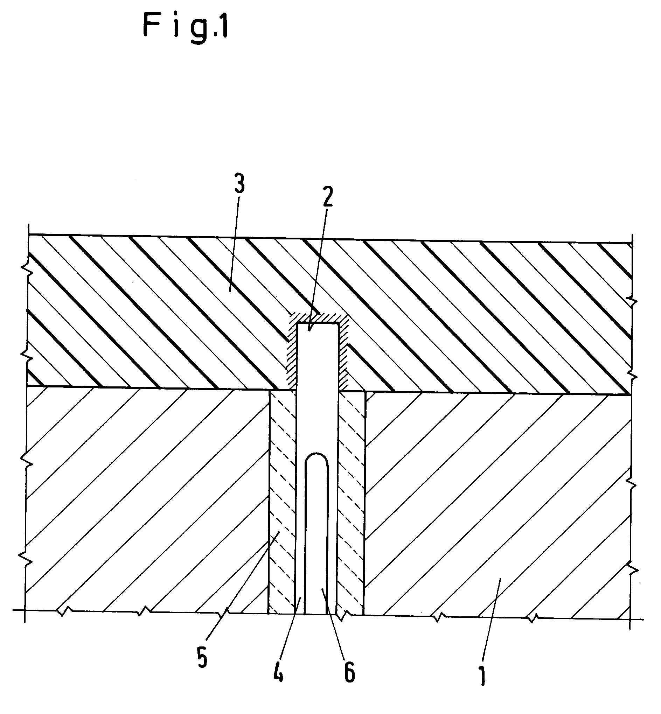

In der Fig. 1 ist der Stift 4 im Werkzeug 1 von einer thermischen Isolationsschicht 5 umgeben. Im inneren des Stiftes 4 befindet sich eine axiale Bohrung 6. Die axiale Bohrung 6 stellt einen Kanal dar, der außerhalb des Werkzeugs 1 mündet und dort an eine Kältemittelleitung angeschlossen ist. Das Kältemittel kann beispielsweise flüssiger Stickstoff sein. Bei der Herstellung des Vorformlings 3 wird mit Hilfe des Kältemittels der Stift 4 extrem gekühlt und entzieht somit im Bereich der Ausnehmung 2 dem Vorformlingmaterial rasch so viel Wärme, daß hier eine Temperatur entsteht, die zumindest so lange unter einem Wert bleibt, daß beim späteren Anspritzen eines weiteren Teiles aus dem gleichen Kunststoffmaterial in diese Ausnehmung 2 kein Verschmelzen im Bereich der Kontaktflächen auftreten kann.

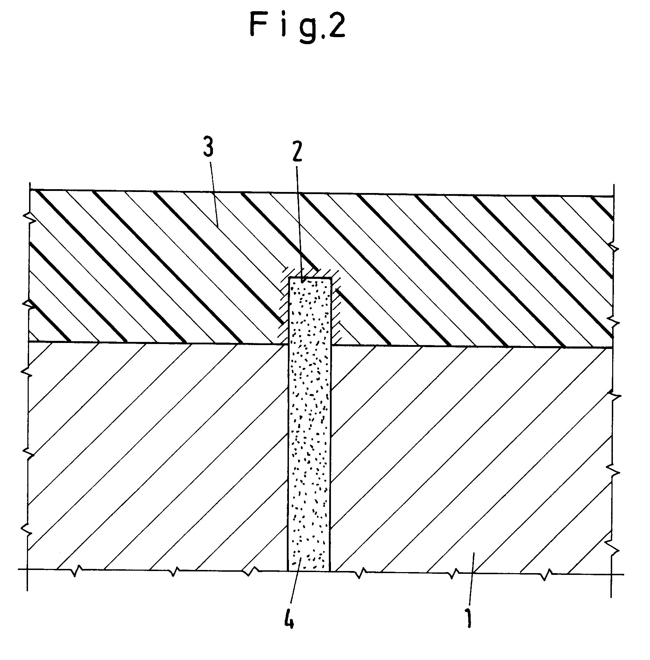

In der Fig. 2 besteht der Stift 4 aus einem porösem Sintermetall. Der Stift 4 durchsetzt das gesamte Werkzeug und ist an seinem unteren Ende mit einem Trennmittel, beispielsweise Silikonöl, beaufschlagbar. Das Silikonöl wandert durch den Kapillareffekt im Stift 4 nach oben und tritt aus der in den Formhohlraum hineinreichenden Oberfläche dosiert aus. Die beim Spritzen des Vorformlings 3 entstehende Ausnehmung 2 wird somit auf ihrer am Stift 4 anliegenden Oberfläche mit dem Trennmittel benetzt, so daß beim späteren Anspritzen eines weiteren Teils an den Vorformling in diesem Bereich keine Adhäsionskräfte auftreten, wodurch zum einen ein Verschmelzen in diesem Bereich verhindert wird und zum anderen bei der späteren gelenkigen Verbindung eine dauerhafte gute Gängigkeit erreicht wird.

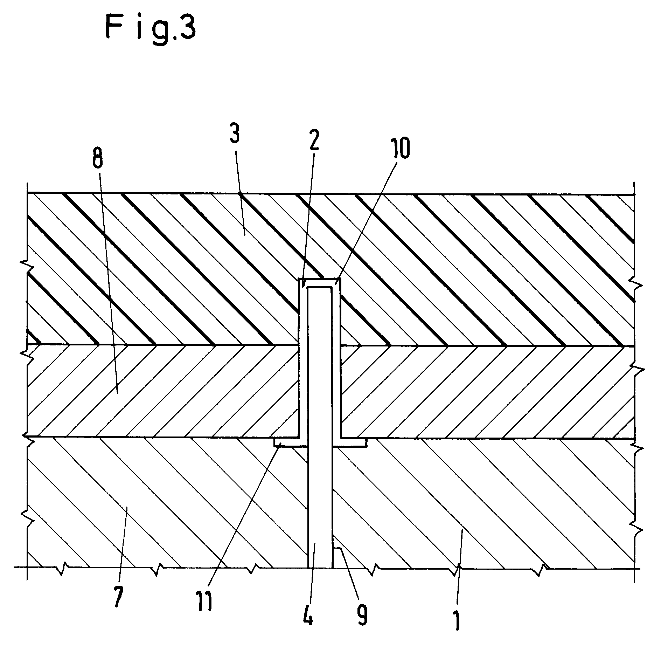

In der Fig. 3 ist die Werkzeughälfte 1 zweiteilig ausgebildet. In einer beide Teile 7 und 8 der Werkzeughälfte 1 durchsetzenden Bohrung 9 sitzt wiederum ein Stift 4, der hier allerdings lediglich als Stützstift für einen hülsenförmigen Isolierneinsatz 10 dient, der sich mit der Ringschulter eines Flansches 11 an der Unterseite des Werkzeugteils 8 abstützt. Die Bohrung 9 im Werkzeugteil 8 ist naturgemäß im Durchmesser größer ausgebildet als die Bohrung 9 im Werkzeugteil 7.

Der Isoliereinsatz 10 bildet nun das Formelement für die Ausnehmung 2 im Vorformling 3 und reicht daher aus der Werkzeugoberfläche in den Formhohlraum hinein. Man macht sich hier die Tatsache zu Nutze, daß z.B, Teflon ein schlechter Wärmeleiter ist. Somit wird nach dem Spritzen des Vorformlings die Wärme über den Stift 4 wesentlich langsamer abgeführt als bei einem Stift ohne diese Wärmeisolierung. Wird zur Herstellung des Vorformlings ein telikristalliner Kunststoff verwendet, wird durch die langsame Abkühlung im Bereich der Ausnehmung 2 eine bessere Kristallisation erreicht. Eine weitere Verbesserung des Kristallisationsgrades ergibt sich durch Impfen der Vorformlingsoberfläche im Bereich der Ausnehmung 2 mit Kristallisationskeimen, ein Vorgang, der Nukleierung genannt wird. Nukleierende Wirkung hat unter anderem eine Goldbeschichtung, die auf die Teflonoberfläche aufgetragen wird.

Somit ergibt sich im Bereich der späteren Kontaktfläche im Vorformling eine hochkristalline Schicht. Das Aufschmelzen dieser hochkristallinen Struktur benötigt eine höhere Wärme als die, die die Schmelze für das anzuspritzende Teil aufzubringen in der Lage ist.

Obwohl es möglich ist, den erfindungsgemäßen Effekt mit jeder einzelnen der hier vorgestellten Verfahrensvarianten zu erzielen, kann es je nach Anwendungsfall notwendig sein, einzelne der drei Varianten miteinander zu kombinieren.

## Patentansprüche

1. Verfahren zur Herstellung von Kunststoffgegenständen, die aus mindestens zwei beweglich, insbesondere gelenkig miteinander verbundenen Teilen aus dem gleichen Kunststoffmaterial bestehen, wobei eines der Teile ein spritzgegossener Vorformling ist, dessen Verbindung mit dem mindestens einen weiteren Teil durch Spritzgießen in Overmoulding-Technik hergestellt wird,
dadurch gekennzeichnet,
daß beim Herstellen des Vorformlings im Bereich seiner Kontaktfläche (2) für die spätere Verbindung die Oberflächeneigenschaften dieser Kontaktfläche (2) gegenüber den physikalischen Eigenschaften des anzuspritzenden, weiteren Teils verändert werden, wobei die Änderung der Oberflächeneigenschaften zumindest so lange aufrechterhalten wird, bis durch Spritzen und Erstarren des mindestens einen weiteren Teils die Verbindung erfolgt ist.

2. Verfahren nach Anspruch 1,
dadurch gekennzeichnet,
daß die Veränderung der Oberflächeneigenschaften der Kontaktfläche (2) durch Reduzierung der Oberflächentemperatur auf einen derartigen Wert erfolgt, daß sich beim anschließenden Umspritzen im Kontaktbereich eine Mitteltemperatur ergibt, die kleiner ist als die zur Verschweißung erforderliche.

3. Verfahren nach Anspruch 1,
dadurch gekennzeichnet,
daß die Veränderung der Oberflächeneigenschaften der Kontaktfläche (2) durch Reduzierung der Adhäsionskräfte erfolgt.

4. Verfahren nach Anspruch 1,
dadurch gekennzeichnet,
daß die Veränderung der Oberflächeneigenschaften der Kontaktfläche (2) durch Erzeugung einer hochkristallinen Oberflächenschicht in diesem Bereich erfolgt.

5. Verfahren nach Anspruch 1,
dadurch gekennzeichnet,
daß die Veränderung der Oberflächeneigenschaften der Kontaktfläche (2) durch eine Kombination von Temperatur- und/oder Adhäsionskräftereduzierung und/oder der Erzeugung einer hochkristallinen Oberflächenschicht erfolgt.

6. Verfahren nach Anspruch 2 oder 5,
dadurch gekennzeichnet,
daß die Reduzierung der Oberflächentemperatur durch Zuleitung eines verflüssigten Gases in die die Kontaktfläche (2) formende Werkzeugregion erfolgt.

7. Verfahren nach Anspruch 3 oder 5,
dadurch gekennzeichnet,
daß die Reduzierung der Adhäsionskräfte durch Zuführung eines geeigneten Trennmittels in die die Kontaktfläche (2) formende Werkzeugregion erfolgt, wobei das Trennmittel aus der Werkzeugoberfläche austritt.

8. Verfahren nach Anspruch 4 oder 5,
dadurch gekennzeichnet,
daß die Erzeugung der hochkristallinen Oberflächenschicht durch eine Verlangsamung der Abkühlgeschwindigkeit und/oder durch Impfung der Oberflächenschicht mit Kristallisationskeimen (Nukleierung) über die Werkzeugoberfläche erfolgt.

9. Spritzgießwerkzeug zur Durchführung des Verfahrens nach Anspruch 1 und einem der Ansprüche 2 bis 8 mit mindestens einem Formelement für die Erzeugung der Kontaktfläche einer beweglichen, insbesondere gelenkigen Verbindung eines Vorformlings mit einem weiteren Kunststoffteil, das aus dem gleichen Material wie der Vorformling besteht, wobei dieses Kunststoffmaterial in Overmoulding-Technik an den Vorformling angespritzt wird,
dadurch gekennzeichnet,
daß das Formelement (4, 10) Mittel (5, 6, 10) zur Veränderung der Oberflächeneigenschaften der Kontaktfläche (2) aufweist.

10. Spritzgießwerkzeug nach Anspruch 9,
dadurch gekennzeichnet,
daß das Formelement (4) ein mittels verflüssigten Gases abkühlbarer Einsatz ist, der im Werkzeug (1) von einer thermischen Isolationsschicht (5) umgeben ist.

11. Spritzgießwerkzeug nach Anspruch 10,
dadurch gekennzeichnet,
daß zur Zuführung des verflüssigten Gases im Werkzeug (1) ein Kanal (6) vorgesehen ist, der im Formelement (4) endet.

12. Spritzgießwerkzeug nach Anspruch 9,
dadurch gekennzeichnet,
daß das Formelement (4) ein Einsatz aus einem porösen Material ist, und daß der Einsatz durch das Werkzeug (1) hindurch mit einem Trennmittel tränkbar ist.

13. Spritzgießwerkzeug nach Anspruch 12,
dadurch gekennzeichnet,
daß das poröse Material ein Sintermetall ist.

14. Spritzgießwerkzeug nach Anspruch 12 oder 13,
dadurch gekennzeichnet,
daß als Trennmittel Silikonöl verwendet wird.

15. Spritzgießwerkzeug nach Anspruch 9,
dadurch gekennzeichnet,
daß das Formelement (4, 10) ein Einsatz (4) mit einem Teflonüberzug (10) ist.

16. Spritzgießwerkzeug nach Anspruch 9,
dadurch gekennzeichnet,
daß das Formelement (4,10) ein Einsatz (4) mit einem Keramiküberzug ist.

17. Spritzgießwerkzeug nach Anspruch 15,
dadurch gekennzeichnet,
daß der Teflonüberzug (10) mit einer Goldbeschichtung versehen ist.

18. Spritzgießwerkzeug nach Anspruch 16,
dadurch gekennzeichnet,
daß der Keramiküberzug mit einer Goldbeschichtung versehen ist.
